**Europäisches Patentamt**

**European Patent Office**

**Office européen des brevets**

(19)

(11) Publication number : **0 627 449 A1**

# (12) EUROPEAN PATENT APPLICATION

(21) Application number : **94303745.7**

(22) Date of filing : **25.05.94**

(51) Int. Cl.[5] : **C08F 10/08, C08F 10/14**

(30) Priority : **04.06.93 FI 932580**

(43) Date of publication of application :
**07.12.94 Bulletin 94/49**

(84) Designated Contracting States :
**BE DE ES FR GB IT**

(71) Applicant : **NESTE OY**
**Technology Centre,**
**P.O. Box 310**
**SF-06101 Porvoo (FI)**

(72) Inventor : **Karbasi, Amir Kiumars**
**Jousenkaari 11 A 20**
**F-02120 Espoo (FI)**
Inventor : **Leinonen, Timo**
**Massatie 8**
**F-06750 Tolkkinen (FI)**
Inventor : **Sormunen, Pekka**
**It. Pitkakatu 22**
**F-06100 Porvoo (FI)**

(74) Representative : **Bannerman, David Gardner et al**
**Withers & Rogers**
**4 Dyer's Buildings**
**Holborn**
**London, EC1N 2JT (GB)**

(54) **Method for polymerizing or copolymerizing C4 - C40 alpha-olefins.**

(57) The present invention is related to a method for polymerizing $C_4$-$C_{40}$ $\alpha$-olefins alone or with other $\alpha$-olefins in one or more steps using a Ziegler-Natta catalyst composition comprising a procatalyst, in which on a spray-crystallized support formed by a magnesium halide and a lower alcohol is deposited a titanium compound and an internal donor comprising an ester of a carboxylic acid with a long-chain alkyl group, said alkyl group being subjected to transesterification, and a cocatalyst made from a metallic compound of the I-III group of the periodic system of elements, and possibly including an external electron donor compound. The homo- or copolymer obtained by virtue of the method can be used for producing films, sheets, pipes, bottles and large containers. It is also suited for use in lubricating oils as a viscosity-reducing component. Further use of the polymer is found in coating, adhesive and cosmetic product formulas. The polymer is suited for use in different kinds of fuels and oils including such products as candles and similar.

EP 0 627 449 A1

The invention is related to a method for polymerizing or copolymerizing $C_4$-$C_{40}$ $\alpha$-olefins alone or with other $\alpha$-olefins in one or more steps with the help of an transesterificated Ziegler-Natta catalyst composition comprising a titanium compound (called the procatalyst) deposited on spray-crystallized support formed by a magnesium halide and a lower alcohol and a cocatalyst made from a metallic compound of the I-III group of the periodic system of the elements.

Conventionally, $\alpha$-olefins have been polymerized with the help of different kinds of Ziegler-Natta catalyst compositions into solid polymers with a high molecular weight varying from several thousands to several millions. In general, the catalyst composition is formed by a procatalyst comprising a transition metal compound of the IV-VI subgroup of the periodic system of elements and a cocatalyst comprising an organometallic compound of the I-III major group the periodic system of elements. The transition metal conventionally is titanium, zirconium, vanadium and/or chromium, while in some cases also other metallic compounds of the above-mentioned groups are used alone or as different compositions. The cocatalyst metal conventionally is aluminum, and particularly the alkyl or alkyl halide compound of aluminum are frequently used. The transition metal compound may occur deposited onto an inert support which conventionally is an inorganic oxide such as silicon dioxide, aluminum oxide, magnesium oxide, titanium oxide, chromium oxide or another inorganic salt or a mixture thereof. The support can also be a metal halide or organometallic compound such as, e.g., dialkyl or alkyl halide. Here, particularly magnesium compounds are conventionally used. The support can in its entirety or partially be formed by a fully organic compound such as a polymer including polyethene, polypropene and so on. A magnesium halide, particularly magnesium chloride or a derivative thereof is particularly suitable.

The catalyst composition may also include other compounds which are incorporated in the catalyst as essential components thereof including different catalyst activity increasing substances or catalyst stereospecificity improving components, the most important of such being compounds called electron donors. Two types of the latter exist: compounds called internal donors, which are added during the preparation of procatalyst compositions, and compounds called external donors, which are added in conjunction with the cocatalyst to the polymerization reactor. The polymerization catalyst can also be prepolymerized prior to the actual polymerization reaction either with the same monomer or monomer mixture as is used in the actual polymerization, or alternatively, with a different monomer or monomer mixture. The cocatalyst used in the prepolymerization can be the same compound as used in the main polymerization, or alternatively, a different compound. Sometimes the main polymerization can be carried out without the need of a new cocatalyst, but instead, the prepolymerized catalyst composition can be used as such. The goal of the prepolymerization step is to make the catalyst composition easier to handle prior to the polymerization reaction or during its feed into the polymerization reaction. An alternative goal of prepolymerization may be the improvement of the polymer end product properties such as its degree of crystallinity or rate of crystallization. The pre-polymerization step can be carried out using a so-called wax prepolymerized catalyst as is disclosed in the FI patent application 925913 (Neste Oy).

The degree of polymerization may be intentionally left low, whereby the product remains in the form of an extremely plastically deforming, even viscous liquid. Then, the product may have a high value as a component in a lubricating composition. Already a solid polymer as such with a relatively low molecular weight may under pressurized conditions serve as a lubricant. Also a high-molecular-weight polymer dissolved or slurried in a suitable solvent, e.g., a hydrocarbon, can be used as a lubricant in the form of an oily solution or emulsion.

A $C_4$-$C_{16}$ olefin, particularly decene, can be polymerized into a lubricating oil according to CA Pat. No. 885,989 and US Pat. No. 3,637,503 using an $AlCl_3$ catalyst. Also $BF_3$ complexes are used to oligomerize 1-decene into a lubrication oil, refer to, e.g., patent FI 80,891. According to US Pat. No. 3,199,178, both an $AlCl_3$- and a $BF_3$-based catalyst are suitable for polymerizing a $C_6$-$C_{12}$ $\alpha$-olefin.

Besides the above-mentioned Friedel-Crafts catalysts, $\alpha$-olefin polymers suited for use as lubricants have also been prepared using Ziegler-Natta catalysts. According to US Pat. No. 3,250,753, $C_2$-$C_{18}$ $\alpha$-olefins and possibly nonconjugated dienes can be homo-or copolymerized using a catalyst composition comprising tris-p-chlorophenyl-o-vanadate and dialkylaluminum chloride. US Pat. No. 3,355,379 discloses a solution suited for removal of paraffins from hydrocarbon-based oils, said solution containing a $C_2$-$C_{22}$ $\alpha$-olefin polymer prepared using a Ziegler-Natta catalyst, and US Pat. No. 3,806,442 discloses a composition for dewaxing of lubricant oils, said composition being made using a Ziegler-Natta catalyst and containing a copolymer of $C_3$-$C_{12}$ and $C_{14}$-$C_{24}$ $\alpha$-olefins.

GB Pat. No. 1,135,697 discloses a method for preparing an $\alpha$-olefin polymer, particularly isotactic polypropene, using a catalyst system comprising $TiCl_4$ and an alkylaluminum halide, said catalyst being prepolymerized with an $C_8$-$C_{16}$ $\alpha$-olefin.

US Pat. No. 4,463,201 discloses the use of a catalyst composition comprising vanadiumoxychloride and aluminumalkyl chloride in the terpolymerization reaction of a relatively long-chain $\alpha$-olefin (4-10 carbons) with ethene and propene.

EP Pat. No. 60,609 describes a copolymer of ethene and $C_3$-$C_{20}$ $\alpha$-olefin suited for use as a lubricating oil or base stock thereof, said copolymer having a molecular weight of 300-30,000 and being prepared using a catalyst system comprising a vanadium halide or vanadium oxyalkoxyhalide and an organic aluminum compound.

US Pat. No. 4,754,007 discloses copolymerization of ethene into LLDPE, where the comonomer can be a $C_3$-$C_{18}$ $\alpha$-olefin, using a Ziegler-Natta catalyst composition deposited onto an inorganic oxide.

JP Pat. No. 53,038,634 discloses the polymerization of $C_{20}$-$C_{30}$ $\alpha$-olefins with the help of a Lewis acid catalyst into a product having a molecular weight of 600-4000 and suited for use as base stock of cosmetic and pharmaceutical product formulas.

JP Pat. No. 1,104,602 discloses the polymerization of ethene or $C_3$-$C_{20}$ $\alpha$-olefin using a catalyst composition comprising crystalline-water-containing sulfates, oxysulfates, sulfites, oxysulfites or oxychlorides of titanium, zirconium, hafnium or vanadium and aluminum alkyls or alkyl halides as well as an external donor.

JP Pat. No. 2 053 805 discloses the polymerization of $C_2$-$C_{16}$ $\alpha$-olefins using a catalyst system formed by a metal of the IV subgroup of the periodic system of elements with an organic aluminum compound and water.

JP Pat. No. 4,202,510 discloses the copolymerization of propene, ethene and/or $C_4$-$C_{20}$ $\alpha$-olefin (e.g., eicosene) using both a prepolymerized procatalyst system formed by a titanium halide, titanium alkoxide or titanium alkoxyhalide with a magnesium compound and an electron donor, combined with a complex cocatalyst formed by an aluminum compound.

JP Pat. No. 4,353,502 discloses the copolymerization of ethene and $C_8$-$C_{16}$ $\alpha$-olefin using a catalyst system formed by cyclopentadienyl-Ti-trichloride and methylalumin-oxane on silica support into a polymer having a molecular weight of approx. 50,000.

It has been now noticed that a long-chain $\alpha$-olefin with 4-40 carbons can be polymerized either alone or with another, shorter-chain $\alpha$-olefin with 2-6 carbons into a polymer using a specific type Ziegler-Natta catalyst composition. The long-chain $\alpha$-olefin can be 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 1-heneicosene, 1-dodecosene or 1-tetracosene etc. up to tetradecene. Advantageous feedstock is formed by $\alpha$-olefins with 4-16 carbons, of which particularly advantageous are 1-butene, 1-decene and 1-hexadecene owing to their abundant supply. Typical comonomers herein are ethene and propene, while also 1-pentene and 1-hexene etc. are suitable. Further suitable are alkyl-group-branched isomers of $\alpha$-olefins including 4-methyl-1-pentene, etc.

The Ziegler-Natta catalyst composition used in the invention is formed by a titanium compound and an organic aluminum compound. The titanium compound was placed on a support complex prepared by spray-crystallization from a magnesium halide and a lower alcohol. In connection with the present text, the term "lower alcohol" is used referring to an aliphatic monoalcohol with 1-6 carbons, of which ethanol has been found particularly advantageous. The most preferred magnesium halide is $MgCl_2$. The spray-crystallization technique is exhaustively described in FI Pat. No. 80,055. When the preparation of the procatalyst is carried out using such an internal electron donor which contains an alkyl group in which the alkyl has more carbon atoms than the alkyl group of the support compound alcohol, transesterification between the alkyl group of the support compound alcohol component and that of the donor occurs in certain conditions. Details of transesterification can be found in FI Pat. No. 86 866. Unexpectedly, it has recently been discovered that the above-described catalyst is particularly effective in the polymerization of long-chain $\alpha$-olefins, too.

The transition metal compound in the procatalyst component of the catalyst system comprises a titanium compound of the type $Ti(OR)_pX_{4-p}$ with a valence of 4, where R is a alkyl group with 1-30 carbons, X is a halogen atom and p has a value from 0 to 4. Advantageously, R is a hydrocarbon group of 1-20 carbons and the compound does not contain any hydroxyl groups. The most advantageous compound of this kind has been found to be titanium halide, particularly $TiCl_4$.

The organometallic compound can be an aluminum compound of the type $R'_{3-n}AlX_n$, where R' is a hydrocarbon group with 1-30 carbons, X is a halogen atom and n has a value from 0 to 3. Advantageously, R' is an alkyl group with 1-20 carbons, typical species of such alkyl-Al halides being dialkyl-Al chlorides, alkyl-Al dichlorides, alkyl-Al sesquichlorides and trialkyl-Al, of which particularly advantageous are diethyl-Al-chloride (DEAC), ethyl-Al-dichloride (EADC), ethyl-Al-sesquichloride and particularly trimethyl-, triethyl-, tri-i-butyl-aluminum, etc. Triethyl-Al (TEA) and tri-i-butyl-Al (TIBA) are the most commonly used compounds.

As mentioned above, the internal donor must contain an alkyl group with a longer chain than that of the support compound alcohol. The alkyl group must be chemically bonded to another part of the donor via, e.g., an ester bond. Typical species of such compounds are esters of univalent or higher valent carboxylic acids, e.g., esters of aromatic carboxylic acids including esters of benzoic, phthalic, isophthalic and terephthalic acids. Further advantageous species are dialkylphthalates, particularly dioctylphthalate.

Because the alkyl group of the ester is replaced in the transesterification reaction with that of the alcohol,

3

also the character of the donor changes. In contrast to a corresponding short-chain ester, a long-chain phthalic acid ester is free from any catalyst poisoning effect. Therefore, a long-chain ester is usable in the synthesis of the catalyst, and in fact, the activity of the catalyst being prepared can be even increased, while in the contrary, when short-chain esters are used, the catalyst activity decreases very rapidly when the amount of the ester is increased. Admittedly, short-chain esters of phthalic acid give the polymer an improved isotacticity over that achievable with long-chain esters. By adding a long-chain phthalate, advantageously dioctyl phthalate, in the catalyst synthesis, and by transesterificating the same into a short-chain ester, advantageously diethyl- or dimethylphthalate, a high activity can be combined with a high isotacticity. Owing to this novel method, the donor content and also the donor-to-magnesium ratio in the catalyst can be reduced to a low level, which indicates that the catalyst surface is also cleaner, i.e., the catalyst surface is free from unnecessary reaction products, whereby the active center of the catalyst remains unobstructed which may further contribute to the polymerization of long-chain monomers. Further reference herein is made to FI Pat. Nos. 88,047, 88,048 and 88,049.

The external donor used in conjunction with an transesterificated procatalyst and a co-catalyst such as an organic aluminum compound may be an alkoxysilane, e.g., cyclohexylmethyldimethoxysilane (CMMS). A great number of silanes suited for use as external donors, e.g., cyclohexyltrimethoxysilane, phenyltriethoxysilane, etc., are listed in JP Pat. No. 60,011,924. Also different kinds of ethers have recently been found suitable including cyclo- and diethers in particular. Examples of these are, e.g., methyl-t-butylether (Chem. Abstr. Reg. No. 1634-04-4), cineol (CA Reg. No. 470-82-6), 2-phenylpropionaldehydedimethylacetal, or 2-phenyl-1,1-dimethoxypropane (FPAD-MA, CA Reg. No. 90-87-9).

The external donor used in conjunction with the organic aluminum compound may occur alone or in the form of a mixture with other donors. The organic aluminum compound and the external donor may be charged separately to the polymerization process, or advantageously by first mixing the organoaluminum compound with the external donor and subsequently charging the mixture into the polymerization process.

The homo- or copolymers of higher $\alpha$-olefins (C4-C40) can be produced by gas-phase, slurry or bulk processes. They can include several steps which are of the same or different type.

The polymers of low boiling point $\alpha$-olefins such as butene-1, hexene-1 are usually prepared in gas phase reactors, and in the case of the other higher $\alpha$-olefins slurry (monomer and solvent) or bulk phase (only monomer) is used. The process could include one or several reactors, operated in series. The reactor or reactors may be operated continuously or semi-continuously, at a suitable pressure and temperature. The reactor temperature must be maintained below the crystalline melting point of the polymer preferably from 20 °C to 75 °C (pressure being respectively 2-10 bar), and especially from 40 °C to 65°C (pressure being respectively 4-8 bar). The polymerization conditions such as pressure and temperature could be the same or different in different reactors. Catalyst can be introduced in suitable amounts into the first reactor alternatively as a powder or in a very minor proportion of solvent, or a diluent. The catalyst could be original or prepolymerized catalyst. Monomer or monomers, hydrogen, cocatalyst, and external electron donor are fed into the first reactor. In case of multi-step polymerization process, monomer or monomers, and hydrogen are also fed into the other reactors too. Hydrogen is used for controlling molecular weight and improving catalyst activity.

In continuous process, the unreacted monomer or monomers are collected, recovered and circulated in the process. The polymer is then transferred to cyclon separator where solid polymer is separated and transferred to catalyst deactivation unit. After catalyst deactivation the product is pelletized in the extruder where desired additives are mixed into the product.

Slurry or bulk process can be divided in two main types: A) product is non-crystalline and soluble or B) soluble or crystalline and non-soluble.

A) If product is non-crystalline and hydrocarbon soluble it should be produced in a slurry type process. The polymerization reaction can be conducted in one or several reactors, operated in series in either batch, semi-batch, or continuous reaction. This sort of product is obtained when for example hexene-1, octene-1, decene-1, dodecene-1 or their mixtures are polymerized in a diluent. Suitable diluents include hydrocarbon solvents, such as pentane and the like, naphtha, gasoline fractions, kerosene, gas oil fractions, light or heavy lubricating oils, and the like. Organic hydrocarbon solvents, such as benzene, toluene, the xylenes, and the like. A solvent is not required when the unreacted monomer is not recovered. In this case the monomer is used as a solvent.

Air content of monomer, and diluent is removed by sparging nitrogen through liquids. Monomer and diluent were purified by passage over a column of activated basic aluminumoxide, or activated molecular sieves in order to remove moisture.

Catalyst can be introduced in suitable amounts into the reactor alternatively as a powder or in a very minor proportion of solvent, or a diluent. The catalyst could be original or prepolymerized catalyst. Cocatalyst and external electron donor are fed into the polymerization reactor. Polymerization reactor is preferably maintained at from -30 °C to 100 °C, and especially from -20 °C to 40 °C. Hydrogen can be used to regulate the molecular weight.

After polymerizing at a desired temperature for a certain time, the polymerization reaction is stopped by adding a catalyst deactivator. Then the reactor content (polymer solution) is transferred into the distillation vessel. Antioxidants and other additives can be added to the polymer solution to prevent the polymer from oxidation and degradation. The additives could be added into the reactor or distillation vessel, preferably to the distillation vessel. The distillation could be carried out at lower pressures below 1 bar. Recovered monomer is then pumped into the monomer storage tank. The product then is cooled to be barrelled. The diluent content of product could be removed by using a evaporator, if diluent-free polymer is needed.

B) If product is a solid, crystalline and non-soluble polymer, then it should be produced in a slurry or bulk type process. This type of product is produced when for example tetradecene-1, hexadecene-1, octadecene-1 or their mixtures are polymerized. The polymerization reaction can be conducted in one or several reactors, operated in series in either batch, semi-batch, or continuous reaction. A solvent is not required, if the polymerized monomer is used as diluent. Polymerization procedure is the same as the one explained in the part A.

After polymerizing, the polymerization reaction is stopped by adding a catalyst deactivator. The reactor content is filtered to separate the polymer from the unreacted monomer, and diluent. After filtration, the polymer is washed with solvent and then it is transferred into the drying units. The polymer is dried by sparging heated nitrogen through the polymer. Dried polymer then is pelletized and stabilized with adding additives in the extruder. The monomer and diluent mixture is then distilled in distillation columns to separate the monomer from the diluent.

Homo- and copolymers of $C_4$-$C_{40}$ $\alpha$-olefins can be used as intermediate and additive components in a great number of different compositions. For instance, films, sheets, pipes, large containers, bottles, etc., can be produced from such a polymer either alone or by using mixtures thereof with other polymers, frequently complemented with a variety of additives. In cosmetic products the polymer can be used as the base oil or wax or other component into which the other components are mixed, whereby the base component renders the favorable properties to the application of the product such as, e.g., easy spreading and good absorption.

The polymer can act as an insulator in multiple applications, where its low melting point can be utilized in certain components such as relays and switches.

In lubricants developed to aid the movements of different equipment and machinery components or to prevent the entry of corrosive agents into a protected object or to improve the flow of different materials, such noncrystalline, hydrocarbon-soluble, yet high molecular weight (even greater than 1,000,000) polymers as are obtained by virtue of the present invention can be used as additives.

Such properties can further have a crucial impact on the consistency and other properties of the composition containing the polymer. If the polymer obtained from the present process is added in a liquid flowing in a piping, e.g., a liquid hydrocarbon transferred from a container to another, and the transferred liquid may have a high viscosity, then the polymer addition is capable of reducing the flow resistance through internal lubrication of the flow, which is evidenced as an increase of the flow rate, sometimes even by a drastic amount. For this application, suitable polymers in particular are the linear polymers of higher $\alpha$-olefins including poly-1-octene, poly-1-decene or poly-1-dodecene. In general, such a polymer is capable of improving the viscosity and viscosity index (which is the ratio of two viscosities determined at two different temperatures) of lubricating oils when mixed with a crude-oil based or synthetic base stock. The improvement in the temperature dependence of oil viscosity means increase of the oil viscosity index, since a low viscosity index expresses a strong change of the oil viscosity with temperature. Lubricating oils developed for such a viscosity reduction have a low molecular weight, typically in the range 2000-30,000.

The homo- and copolymers of $C_{14}$-$C_{40}$ $\alpha$-olefins with an extremely long chain structure are solid, crystalline and waxy in room temperature. The catalyst according to the invention produces such polymers with a high activity, and the obtained product is extremely pure.

The miscibility of polymers obtained by virtue of the present method is remarkably good with other polymers such as the homo-, polyblend, block or graft polymers of vinyl chloride, styrene or olefins, or with mixtures of such polymers.

The end product, in which the polymer according to the invention is used as a component with other polymers and/or components, is suited for use as the coating of different materials with advantageous properties improving the sound insulation, electrical insulation, moisture barrier and corrosion protection characteristics of the product in the manner required from, e.g, different building materials including moisture barrier in sanitary spaces. The polymer is also suited for use as an adhesive. Moreover, it must be noted that owing to its nonhazardous character, the polymer may be in contact with foodstuffs when used in, e.g., the packaging and storage materials thereof. Furthermore, the polymer can be incinerated without any hazard, which is a benefit in the waste management of products containing the polymer. The polymer can also be used as a component in different kinds of fuels, even in candles and similar.

As discussed above, the catalyst according to the invention later denoted by A has an activity better than that of prior-art catalysts (comparative catalyst denoted by B) in the polymerization of $C_4$-$C_{40}$ α-olefins. This improvement is due to the transesterification employed. Transesterification keeps the catalyst surface cleaner, thus making the catalyst suited for polymerization of long-chain α-olefins, too. Catalyst A attains 7-fold activity in the polymerization of 1-butene over that of the comparative catalyst. The polybutene produced using catalyst A has a high isotacticity (95 % measured with $C^{13}$ NMR) and excellent morphology, while the corresponding product made with comparative catalyst B has an extremely unorganized morphology and is tacky. Furthermore, comparative catalyst B turns inactive when used in the homopolymerization of long-chain α-olefins, that is, 1-hexadecene and olefins with a longer structure.

When used in the copolymerization of propene and long-chain α-olefins, catalyst A exhibits improved activity when α-olefins with a longer-chain structure are used as the comonomer. Polymerization of propene and 1-decene or 1-hexadecene gives different kinds of products, and the proportion of comonomer units in the copolymer varies in the range 0.2-42 %. When produced using catalyst A, the copolymer has a lower degree of crystallinity and lower melting point than the product obtained with comparative catalyst B. The lower the melting point, the higher the proportion of long-chain comonomer units in the copolymer. Also the activity of catalyst A in copolymerization is higher than that of comparative catalyst B.

EXAMPLES

In the following examples are given on polymerization of higher α-olefins alone or with propene using an transesterificated Ziegler-Natta catalyst.

Preparation of procatalyst

Procatalyst A (according to invention)

51 kg spray-crystallized support $MgCl_2 \bullet n \cdot EtOH$, where Et = ethyl group and n = 2-4, containing 219 mol Mg, was mixed in a reactor under inert conditions with 300 l hydrocarbon (LIAV 110, Neste Oy) having a boiling point of 110 °C. The slurry thus obtained was cooled to -15 °C. Subsequently, 600 l cold $TiCl_4$ was added and the temperature was allowed to rise gradually to 20 °C. Next, 12.4 kg (31.8 mol) of internal donor, dioctylphthalate (DOP), was charged to the reactor. The temperature was elevated to 130 °C, and the solution was removed after half an hour from the reactor. Next, 600 l fresh $TiCl_4$ was charged to the reactor. Subsequently, the mixture was thermostatted at 120 °C. After one hour the solid catalyst was washed three times with hot hydrocarbon LIAV 110. The catalyst was dried with nitrogen at 50 - 60 °C.

The catalyst composition was analyzed as: Ti 2.0 wt-%, Mg 15.2 wt-%, DOP (dioctylphthalate) 0.1 wt-%, DEP (diethylphthalate) 14.3 wt-% and Cl 50.3 wt-%.

Procatalyst B (comparative catalyst)

The comparative catalyst in this test was essentially equivalent to that described in the patent publications of FI Pat. No 70,028 and EP Pat. No. 86,472. These prior-art catalysts are characterized in that no essential transesterification occurs at the titanization temperature (120 °C) used in their preparation process. In other words this means that the added internal donor remains essentially in its initial form in the activated procatalyst also after the titanization step.

According to FI Pat. No. 86,866, the transesterification step is advantageously performed at a temperature close to or in excess of the boiling point 136 °C of $TiCl_4$.

Examples 1 and 9

Polymerization was carried out in a 5 l steel reactor using liquid propene as the medium. Prior to starting the polymerization, the reactor was vacuumed, heated to 80 °C, cooled to 20 °C and purged with nitrogen.

Triethylaluminum and the external donor (cineol for catalyst A in Example 1 and cyclohexylmethyldimethoxysilane for catalyst B in Example 9) were dissolved in 40 ml heptane. 20 ml this solution was injected to the reactor. The procatalyst was charged to the reactor with the rest of the solution. Polymerization was carried out using 71 mmol hydrogen. Finally, 1400 g propene was charged to the reactor. The polymerization temperature was 70 °C.

The isotacticity index of the propene polymer thus obtained was determined by heptane extraction. The polymerization conditions, reagent amounts and results are given in Table 1.

Examples 2 and 10

Polymerization was carried out in gas phase in a 5.2 l steel reactor. 50 g of small-diameter polypropene particles were used to form the solid phase of a fluidized bed. Prior to starting the polymerization, the reactor was vacuumed, heated to 80 °C, cooled to 50 °C and purged with nitrogen.

Aluminumalkyl (TIBA = tri-i-butyl-Al for catalyst A and TEA = triethyl-Al for catalyst B, 98 vol-% of total volume was used) and the donor (cineol for catalyst A and cyclohexylmethyldimethoxysilane for catalyst B, 97 vol-% of total volume was used) were dissolved in 20 ml pentane, and the entire volume was injected to the reactor. This procatalyst was initially reacted with aluminumalkyl (for 2 vol-% of total volume) and with the donor (for 3 vol-% of total volume) and then prepolymerized with 0.3 ml 4-methyl-1-pentene. After prepolymerization, the procatalyst was charged to the reactor. 4.1 mmol hydrogen was used in polymerization. Polymerization was carried out in 3.5 h at 65 °C with a continuous pressurized feed of 1-butene at 7 bar.

The polymerization conditions, reagent amounts and results are given in Table 1.

Examples 3 and 11

Polymerization was carried out in a 5 l reactor. Prior to starting the polymerization, the reactor was vacuumed, heated to 80 °C, cooled to 5 °C and purged with nitrogen.

Triethylaluminum and the external donor (cineol for catalyst A and cyclohexylmethyldimethoxysilane for catalyst B) were dissolved in 40 ml heptane. 25 ml of this solution was injected to the reactor. The procatalyst was charged to the reactor with the rest of the solution. The hydrogen partial pressure in the reactor at 50 °C was 7.9 bar, and 1-decene was used instead of propene. The monomer was dissolved in heptane making the total liquid volume in the reactor equal to 1150 ml. Polymerization was carried out in 5.2 h at 75 °C.

The polymerization conditions, reagent amounts and results are given in Table 1.

Example 4

Polymerization was carried out in a 5 l steel reactor in liquid phase. Prior to starting the polymerization, the reactor was vacuumed, heated to 80 °C, cooled to 5 °C and purged with nitrogen.

Triethylaluminum and the donor (cineol for catalyst B) were dissolved in 40 ml heptane. 25 ml of this solution was injected to the reactor. The procatalyst was charged to the reactor with the rest of the solution. The hydrogen partial pressure in the reactor at 50 °C was 7.9 bar. Finally 1000 ml 1-decene was charged to the reactor. Polymerization was carried out in 6 min at 60 °C.

The polymerization conditions, reagent amounts and results are given in Table 1.

Example 5

Polymerization was carried out in a 5 l steel reactor. Prior to starting the polymerization, the reactor was vacuumed, heated to 80 °C, cooled to 5 °C and purged with nitrogen.

Triethylaluminum and the external donor (cineol) were dissolved in 40 ml heptane. 25 ml of this solution was injected to the reactor. The procatalyst was charged to the reactor with the rest of the solution. Hydrogen was not used. The monomer (480 ml 1-decene) was dissolved in heptane making the total liquid volume in the reactor equal to 2530 ml. Polymerization was carried out in 22 h at 5 °C.

The polymerization conditions, reagent amounts and results are given in Table 1.

Example 6

Polymerization was carried out in the same manner as in Examples 3 and 11 with the exception that 2-phenylpropionaldehydedimethylacetal (= 2-phenyldimethoxyethane) was used as the donor and the hydrogen partial pressure was 12 bar at 65 °C. The monomer was dissolved in heptane making the total liquid volume in the reactor equal to 1250 ml.

The polymerization conditions, reagent amounts and results are given in Table 1.

Examples 7 and 12

Polymerization was carried out in a 2 l steel reactor. Prior to starting the polymerization, the reactor was vacuumed, heated to 80 °C, cooled to 9 °C and purged with nitrogen.

Triethylaluminumalkyl and the external donor (cineol for catalyst A and cyclohexylmethyldimethoxysilane for catalyst B) were dissolved in 30 ml heptane. 15 ml of this solution was injected to the reactor. The procatalyst was charged to the reactor with the rest of the solution. Hydrogen was not used, and 1-hexadecene was used instead of propene. The monomer was dissolved in heptane making the total liquid volume in the reactor equal to 900 ml. Polymerization was carried out in 4 h at 9 °C.

The polymerization conditions, reagent amounts and results are given in Table 1.

Example 8

Polymerization was carried out as in Example 7 except that 2 mol hydrogen was used and the polymerization temperature was 60 °C. The volume of 1-hexadecene used was 400 ml, and the total liquid volume in the reactor was 900 ml.

The polymerization conditions, reagent amounts and results are given in Table 1.

Examples 13, 14, 15 and 17

Polymerization was carried out in a 2 l steel reactor. Prior to starting the polymerization, the reactor was vacuumed, heated to 80 °C, cooled to 30 °C and purged with nitrogen.

Aluminumalkyl (TIBA for catalyst A and TEA for catalyst B) and the external donor (cineol for catalyst A and cyclohexylmethyldimethoxysilane for catalyst B) were dissolved in 30 ml heptane. 15 ml of this solution was injected to the reactor. The procatalyst was charged to the reactor with the rest of the solution. 11 mmol hydrogen was used. The comonomer (1-decene) was dissolved in heptane making the total liquid volume in the reactor equal to 900 ml. Polymerization was carried out in 4 h at 70 °C using pressurized propane feed to maintain the desired pressure.

The polymerization conditions, reagent amounts and results are given in Table 2.

Examples 16 and 18

Polymerization was carried out as in Examples 13, 14, 15 and 17 with the exception that 1-hexadecene used as the comonomer and hydrogen was not used.

The polymerization conditions, reagent amounts and results are given in Table 2.

## Table 1. Homopolymerization examples

| Example | Cat. | [mg] | Alkyl | [ml] | Donor | [µl] | Heptane [ml] | Monomer | Yield [g] | Activity [kg/gCat.] | Isotacticity [%] | MFR | $M_w$ [g/mol] (GPC) [6] | Tm, DOC, TCr, Tg (DSC) [4] |
|---|---|---|---|---|---|---|---|---|---|---|---|---|---|---|
| 1 | A | 21.2 | TEA | 0.61 | Cineol | 148 | – | Propene 1400 g | 591 | 27.9 | 92.2 [3] | 9.2 [1] | – | – |
| 2 | A | 51.0 | TIBA | 1.63 | Cineol | 110 | – | 1-butene | 461 | 9.0 | – | 1.3 [2] | – | Tm=112 °C, Tcr=78.8 °C [5] |
| 3 | A | 21.9 | TEA | 0.38 | Cineol | 23 | 1000 | 1-decene | 21 | 0.96 | – | – | 20000 | uncrystallized polymer |
| 4 | A | 51.3 | TEA | 1.5 | Cineol | 90 | – | 1-decene | 227 | 5.3/ 10 min | – | – | 106000 | Tm=29.3 °C, Tg=−62.8 °C |
| 5 | A | 51.4 | TEA | 1.5 | Cineol | 90 | 950 | 1-decene | 164 | 3.2 | – | – | 2040000 | Tm=27 °C, Tg=−31 °C |
| 6 | A | 22.0 | TEA | 0.38 | EPADMA | 49 | 1000 | 1-decene | 45 | 2.1 | – | – | 34900 | – |
| 7 | A | 22.0 | TEA | 0.63 | Cineol | 39 | 600 | 1-hexadecene | 5 | 0.23 | – | – | 4156000 | Tm=66 °C, Tg=−37 °C |
| 8 | A | 30.1 | TEA | 0.86 | Cineol | 53 | 400 | 1-hexadecene | 355 | 11.8 | – | – | – | – |
| 9 | B | 22.4 | TEA | 0.74 | CMMS | 54 | – | Propene 1400 g | 711 | 31.7 | 96.4 [3] | 8.5 [1] | – | – |
| 10 | B | 51.7 | TEA | 1.04 | CMMS | 155 | – | 1-butene | 67 | 1.3 | – | 23 [2] | – | Tm=115 °C, Tcr=78.7 °C [5] |
| 11 | B | 20.7 | TEA | 0.41 | CMMS | 30 | 1000 | 1-decene | 15 | 0.72 | – | – | 34000 | uncrystallized polymer |
| 12 | B | 24.7 | TEA | 0.99 | CMMS | 72 | 600 | 1-hexadecene | 0 | 0.0 | – | – | – | – |

1) g/10 min, 230 °C, 2.16 kg
2) g/10 min, 190 °C, 10.0 kg
3) Heptane extraction by the Kumagawa technique, extraction time 1 h.
4) Tm = melting temperature (°C), Tcr = crystallization temperature (°C), Tg = glass transition temperature (°C), DOC = degree of crystallinity (%), determined by DSC.
5) Tm and Tcr for alternative configuration of polybutene.
6) Determined by Gel Permeation Chromatography.

EP 0 627 449 A1

**Table 2.** Copolymerization examples.

| Example | Cat. | mg | Alkyl | [ml] | Donor | [μl] | Heptane [ml] | Comonomer | Pressure [bar] | Yield [g] | Activity [kg/gCat.] | MFR [1] | Tm, DOC, Tcr (DSC) [2] | Comonomer content [wt-%] (NMR) [3] |
|---|---|---|---|---|---|---|---|---|---|---|---|---|---|---|
| 13 | A | 29.9 | TIBA | 1.6 | Cineol | 68 | 880 | Decene 20 ml | 6.0 | 359.6 | 12.0 | 2.5 | 159.5, 41.0, 108.2 | 0.2 |
| 14 | A | 33.5 | TIBA | 1.8 | Cineol | 74 | 820 | Decene 80 ml | 6.0 | 370 | 11.0 | 0.5 | 153.0, 33.6, 100.5 | 2.9 |
| 15 | A | 34.3 | TIBA | 1.8 | Cineol | 76 | 600 | Decene 300 ml | 4.0 | >290 | > 7.0 | 59.2 | 149.2, 9.0, 98.9 | 42 |
| 16 | A | 27.8 | TIBA | 1.5 | Cineol | 97 | 880 | Hexadecene 20 ml | 6.0 | 157 | 5.7 | 0.05 | 157.2, 37.3, 110.5 | – |
| 17 | B | 29.1 | TEA | 0.9 | CMMS | 134 | 820 | Decene 80 ml | 6.0 | 299 | 10.3 | 4.1 | 154.7, 36.1, 98.7 | – |
| 18 | B | 26.0 | TEA | 0.9 | CMMS | 125 | 880 | Hexadecene 20 ml | 6.0 | 117 | 4.5 | 0.46 | 161.2, 44.0, 116.4 | – |

1) g/10 min, 230 °C, 2.16 kg
2) Tm = melting temperature (°C), Tcr = crystallization temperature (°C), Tg = glass transition temperature (°C), DOC = degree of crystallinity (%), determined by DSC.
3) Determined by $C^{13}$ NMR.

EP 0 627 449 A1

**Claims**

1. A method for polymerizing $C_4$-$C_{40}$ α-olefins alone or with other α-olefins in one or more steps using a Ziegler-Natta catalyst composition, **characterized** in that said catalyst composition comprises a procatalyst, formed by a titanium compound and an alkyl ester of a carboxylic acid deposited on a spray-crystallized support formed by a magnesium halide and a lower alcohol, and a cocatalyst made from an organometallic compound of a metal of the I-III group of the periodic system of elements, and possibly including an external electron donor compound, and said procatalyst further incorporating an electron donor compound having an alkyl group with a longer chain than that of the alcohol component of the support, said alkyl group undergoing transesterification with the alkyl group of the support during the titanization step.

2. A method as defined in claim 1, **characterized** in that said titanium compound is of the type $Ti(OR)_pX_{4-p}$, where R is a hydrocarbon group with 1-30 carbons, X is a halogen atom and p has a value from 0 to 4.

3. A method as defined in claim 1 or 2, **characterized** in that said organometallic compound is of the type $R'_{3-n}AlX_n$, where R' is a hydrocarbon group with 1-30 carbons, X is a halogen atom and n has a value from 0 to 3.

4. A method as defined in claim 2 or 3, **characterized** in that said titanium compound R includes an alkyl group of 1-20 carbons.

5. A method as defined in any of foregoing claims 1, 2 or 4, **characterized** in that said organometallic compound is trialkyl-Al, advantageously triethyl-Al.

6. A method as defined in any of foregoing claims 1, 2 or 3, **characterized** in that the value of p is 4 in said titanium compound.

7. A method as defined in claim 6, **characterized** in that said titanium compound is titanium tetrachloride.

8. A method as defined in any of foregoing claims 1-7, **characterized** in that the catalyst support is a complex compound formed by $MgCl_2$ and an aliphatic $C_1$-$C_6$ monoalcohol, advantageously ethanol.

9. A method as defined in any of foregoing claims 1-8, **characterized** in that a $C_{10}$-$C_{16}$ α-olefin is polymerized alone or with ethene and/or propene.

10. A method as defined in claim 9, **characterized** in that 1-butene is homopolymerized, or alternatively, 1-butene and propene and/or ethene are copolymerized.

11. A method as defined in any of foregoing claims 1-8, **characterized** in that propene and a $C_4$-$C_{40}$ α-olefin are copolymerized.

12. A method as defined in any of foregoing claims 1-11, **characterized** in that the external donor used is a cyclic ether, diether or alkoxysilane.

13. A method as defined in claim 12, **characterized** in that said external donor is cineol or 2-phenylpropionaldehydedimethylacetal.

14. A method as defined in claim 12, **characterized** in that said external donor is cyclohexylmethyldimethoxysilane.

15. A method as defined in any of foregoing claims 1-14, **characterized** in that said alkylester of a carboxylic acid is a $C_4$-$C_{12}$ alkylphthalate, advantageously di-i-butyl- or dioctylphthalate.

European Patent
Office

**EUROPEAN SEARCH REPORT**

Application Number

EP 94 30 3745

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-92 19658 (NESTE OY) <br> * claim 1 * | 1-15 | C08F10/08 <br> C08F10/14 |
| A | EP-A-0 402 958 (IDEMITSU PETROCHEMICAL CO. LTD.) <br> * example 2 * | 1 | |

TECHNICAL FIELDS
SEARCHED    (Int.Cl.5)

C08F

The present search report has been drawn up for all claims

| Place of search | Date of completion of the search | Examiner |
|---|---|---|
| THE HAGUE | 29 August 1994 | Serravalle, M |

EPO FORM 1503 03.82 (P04C01)